# EUROPEAN PATENT APPLICATION

(11) **EP 3 316 058 A2**
(43) Date of publication of application: **02.05.2018**
(21) Application number: 17194329.3
(22) Date of filing: 02.10.2017
(51) Int. Cl.: G05B 19/4093, G05B 19/4099

(54) **TOOL-PATH PLANNING METHOD**

(30) Priority: 27.10.2016 GB 201618140
(71) Applicant: Rolls-Royce plc, London SW1E 6AT (GB)
(72) Inventor: Saravanan, Rajarathinam, Derby, Derbyshire DE24 8BJ (GB); Ng, Wu Xin Charles, Derby, Derbyshire DE24 8BJ (GB); Chan, Kelvin Hau-Kong, Derby, Derbyshire DE24 8BJ (GB); Johnson, Tom, Derby, Derbyshire DE24 8BJ (GB)
(74) Representative: Rolls-Royce plc

(57) **Abstract**

This disclosure concerns a method for selecting a tool-path strategy in a material processing operation. The geometry of a work piece (34) and the contact patch (36) of a tool are determined and used to define a tool-path boundary (30,32). A number of different possible tool-paths (38,40,46) are then simulated within the tool-path boundary (30) and the most preferred tool-path (38,40,46) is selected based on predefined requirements.

## Description

### BACKGROUND OF THE DISCLOSURE

The present disclosure relates to planning of tool-paths across a component or work piece. In particular, the disclosure relates to a method of tool-path planning to improve the efficiency and/or uniformity of the coverage in, for example, a linishing operation.

Modern automated manufacturing and finishing methods routinely employ predetermined tool-paths to move a tool across the surface of a component or work piece. Ensuring complete coverage of a substantially flat surface of a work piece, or a particular area thereof, is relatively straightforward. All that is required is knowledge of the area to be covered and the contact area of the tool, and the appropriate spacing, or step-over, between successive parts/passes of the path can be easily determined.

However, where a surface of the work piece is not substantially flat, the effective contact area of a tool will not be constant across the entire surface, and thus the optimum spacing between successive passes will vary.

The great variety of possible shapes and contours presented on work piece surfaces mean that optimisation of a tool-path for each individual component becomes impractical. As a result, in order to ensure complete coverage, a selected tool-path will often result in overlaps in several areas of the surface, leading to unnecessary processing of these areas. Skilled operators can minimise the degree of overlap, and thus reduce the inefficiencies, but the assessment results in delays in overall process time.

Differently shaped work pieces, different materials and different required material removal rates or surface finishes may also lend themselves to different optimal tool-path types. There are, therefore, numerous different variables that would need to be optimised for each particular operation in order to achieve and optimise the processing.

It is an aim of the present disclosure to overcome or substantially mitigate some or all of the abovementioned problems.

### BRIEF SUMMARY OF THE DISCLOSURE

According to a first aspect of the disclosure there is provided a method for selecting a tool-path strategy in a material processing operation, the method comprising determining the geometry of a work piece to be processed and the contact patch of a tool on the work piece; defining a tool-path boundary based on the geometry of the work piece and the contact patch of the tool; simulating a number of different possible tool-paths within the tool-path boundary; calculating a material removal map for each simulated tool path; calculating the process time for at least a selection of the simulated tool paths; and selecting a preferred tool-path based on a predefined requirement for material removal and/or process time.

More than one tool-path boundary may be determined to account for different possible orientations of the tool, e.g. in situations where the dimensions of the contact patch of a tool are not uniform. A number of different possible tool-paths may then be simulated within each tool-path boundary.

The different tool-paths may be stored on a database. The different possible tool-paths may comprise tool-paths of different types (e.g. raster, zig-zag, concentric, Peano, Hilbert, etc.) and or different orientations (horizontal, vertical, etc.). Belt wear data, for example a separate belt wear compensation graph, may also be stored for each tool-path type to allow the method to compensate for belt wear. A database of such data would allow the automation of tool-paths for various geometries.

Additionally, or alternatively, the different possible tool-paths may comprise tool paths with different step-over distances. The process time may then be calculated only for a selection of the simulated tool-paths which have the largest step-over distance to achieve a predetermined minimum threshold for undulations.

The geometry of the work piece may be determined using an optical measuring or scanning technique, e.g. from a three-dimensional scan of the work piece using a machine produced by GOM GmbH, referred to hereafter as a 'GOM scan'.

The contact patch of a tool on the work piece may be determined experimentally, e.g. through 'touch and go' of the tool on a surface, or theoretically, e.g. using a standard contact mechanics equation based on Hertzian contact stress.

The material removal map for each tool-path may be calculated at a common defined force and/or a common defined feed rate, e.g. at a minimum or 'lower limit' force and/or feed rate. Depending on the tool being used, the belt speed or similar may be set, e.g. at a minimum or 'lower limit', when calculating the material removal map for each tool-path.

### BRIEF DESCRIPTION OF THE DRAWINGS

Practicable embodiments of the disclosure will be described in further detail below, by way of example only, with reference to the accompanying drawings, of which:
Figures 1A to 1C show examples of a prior art polishing method for a complex surface;
Figure 2 shows a process map of the present disclosure;
Figures. 3A and 3B illustrate the determination of the boundaries of an example tool-path on an example surface;
Figures 4A to 5C show different possible tool-paths for the example surface from Figures 3A and 3B;
Figures 6A to 6C illustrate possible variations in the tool-path of Figure 4A;
Figure 7 shows a further selection of possible tool-paths;
Figure 8 shows material removal maps for the tool-paths of Figure 7; and
Figure 9 shows a plot of material removal against tool-path length for various tool sizes and applied forces.

### DETAILED DESCRIPTION OF THE DISCLOSURE

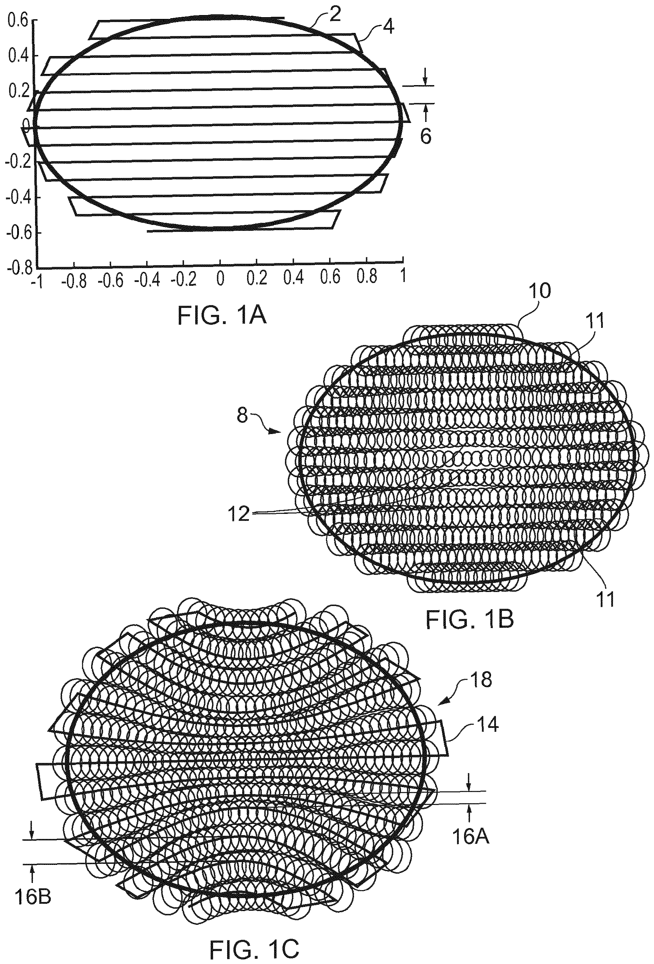

Figures 1A to 1C illustrate the polishing of an ellipsoid according to prior art methods. These figures are taken from Michael Rososhansky, Fengfeng (Jeff) Xi, "Coverage based tool-path planning for automated polishing using contact mechanics theory", Journal of Manufacturing Systems, volume 30, issue 3, August 2011, pages 144-153.

Figure 1A shows a two dimensional projection 2 of the ellipsoid overlaid with a continuous raster polishing path 4. The step-over size 6 of the path 4 is maintained constant between two passes across the part surface, which is curved (out of the page) in both x any y directions.

The Coverage Area Map (CAM) 8 for the ellipsoid, generated using the continuous raster path 4 of Figure 1A, is shown in Figure 1B. The CAM 8 shows the contact area 10 between the polishing tool and the part surface for consecutive points along the path 4. Crowding effects 11, e.g. regions where the polishing tool overlaps the same path more than once, and unpolished envelopes 12, which are missed by the polishing tool, can both be seen in Figure 1B. Indeed, for an ellipsoid, the unpolished envelopes 11 and the crowding effects 12 will always both be present if the step-over size 6 of the polishing path 4 is maintained constant throughout the part surface, because the effective contact area/patch of the polishing tool will change along the path due to the curvature of the surface. This results in both inefficient and incomplete polishing of a component.

Figure 1C shows a modified polishing path 14 for the same ellipsoid along with its related Coverage Area Map (CAM) 18. The step-over size 16a,16b varies, according an algorithm, throughout the polishing path 14 to provide a full coverage along the part surface while minimising the amount of crowding. The algorithm improves the completeness and efficiency of the polishing by accounting for the change in effective contact area of the tool. However, the prior art does not present a complete solution to automate the tool-path strategy for the purpose of highly controlled and consistent linishing of work pieces.

The prior art focuses on adapting the step over of the raster tool-path in order to achieve even coverage over freeform 3D surfaces. The method is limited in terms of the range of sizes of work piece that can be polished, does not automatically select the type of tool-path and to optimize for process time, and is not able to automatically select appropriate linishing parameters to achieve a desired material removal rate. Hence, the prior art solution provides no method of automatic tool-path planning which considers various tool-paths and orientations to determine the optimized path, as well as automatically determining the tool-path strategy parameters for various sizes and shapes of features, based on the input geometry and process parameters, which are stored in a knowledge base.

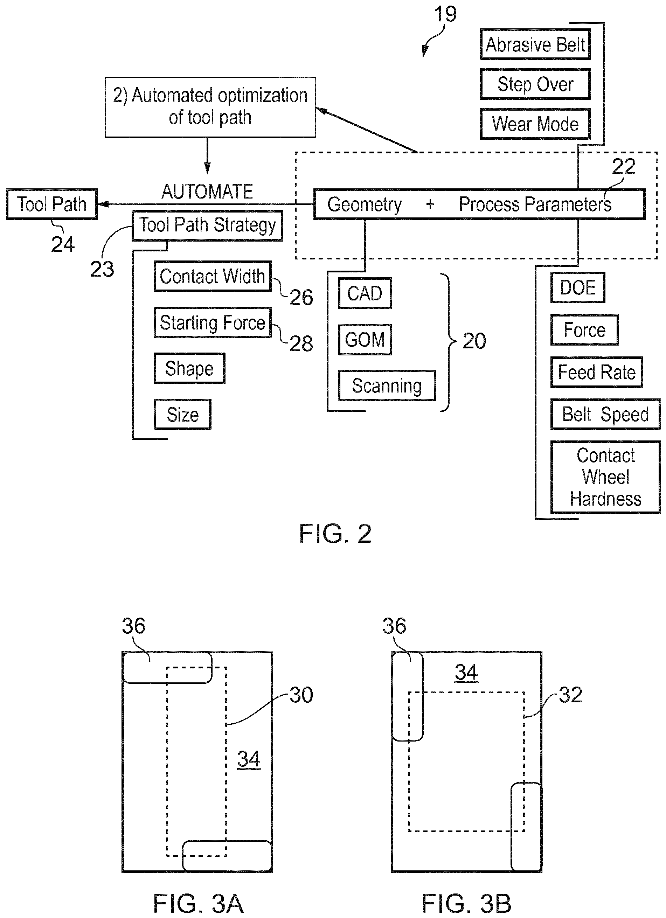

Figure 2 shows a process map 19 of the present disclosure. The geometry of a work piece is determined 20 from a GOM scan and/or other optical measuring/scanning technique and is used, along with other fixed process parameters 22, to optimise a tool-path strategy. The output tool-path strategy 23 contains not only the optimised tool-path 24, but also other optimised variables such as the contact width 26 and starting force 28.

An example of the tool-path optimisation process will now be described for a linishing process.

The first step is to determine the contact patch of a particular tool on surface to be processed. This can be done experimentally, for example by 'touch and go' of a linishing tool on a surface, or theoretically using a standard contact mechanics equation based on Hertzian contact stress.

The boundaries of a tool-path are then determined, based on the contact patch of the tool, to ensure that there is minimal overhang of the tool contact patch for various tool orientations. It is important to consider different tool orientations where the contact patch of the tool is not symmetrical, as in Figures 3A and 3B, which show the determination of two different tool-path boundaries 30,32 for the same tool on the same rectangular surface 34. In Figure 3A the tool contact patch 36 can be considered to be oriented at 0°, giving rise to a relatively long and narrow tool-path boundary 30. In Figure 3B, the same rectangular tool contact patch 36 has been rotated through 90°, and the resulting tool-path boundary 32 is noticeably squarer.

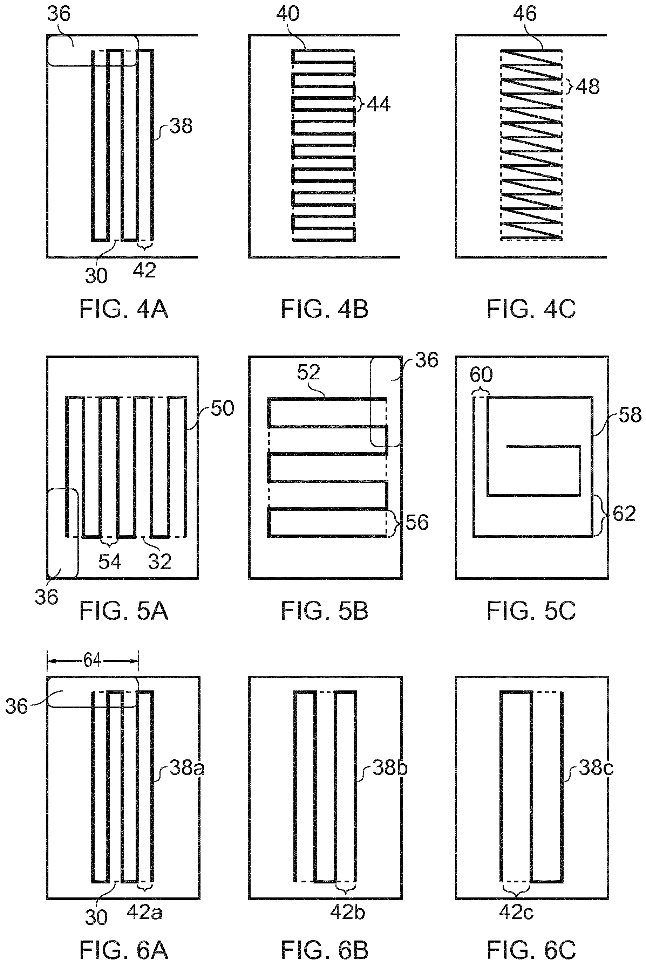

Having determined one or more tool-path boundaries 30,32, various tool-path types and strategies can be planned/generated within the or each defined boundary 30,32 by CAM software. Tool path strategy may include tool paths with different principal direction of travel etc. Some example tool-paths are shown in Figures 4A to 5C. The orientation of the tool contact patch 36 is shown in Figures 4A, 5A and 5B.

Example tool-paths for the boundary 30 of Figure 3A are shown in Figures 4A to 4C. Figures 4A and 4B show two different orientations of raster paths 38,40 with set step-over distances 42,44 respectively. Figure 4C shows a zig-zag path 46 with set step-over distance 48. Figures 5A to 5C show example tool-paths for the boundary 32 of Figure 3B, with Figures 5A and 5B again showing two different orientations of raster paths 50,52 with set step-over distances 54,56, and Figure 5C illustrating a concentric path 58 with a set step-over distance 60,62 in each direction. It should be understood that the list of examples provided is non-exhaustive.

For each of the tool-paths, variations are then generated with different step-over distances. Figures 6A to 6C illustrate this for the example tool-path 38 shown in Figure 4A. Figure 6A is the first variant of the tool-path 38a, with a step-over distance 42a equal to the step-over distance 42 shown in Figure 4A. Figures 6B and 6C show progressively greater step-over distances 42b,42c, giving rise to alternative tool-paths 38a,38b within the same boundary 30. The step-over distances 42a,42b,42c are all smaller than the length of the tool contact patch 36 to ensure full coverage of the surface 34. Additional changes to the step-over distance may be made to generate additional tool-paths if desired

The process illustrated in Figures 6A to 6C is repeated for each of the individual tool-paths 38,40,46,50,52,58.

The removal of material from the surface 34 is then simulated for each of the generated tool-paths at a defined force, feed-rate, and belt speed (the main parameters affecting material removal). The force value is fixed at a lower bound, to allow for a subsequent increase to account for belt wear. The feed-rate is also fixed at a lower bound so as to avoid bouncing of the flexible grinder which can occur at feed-rates that are too high, and the belt speed is fixed at the recommended value from the original equipment manufacturer.

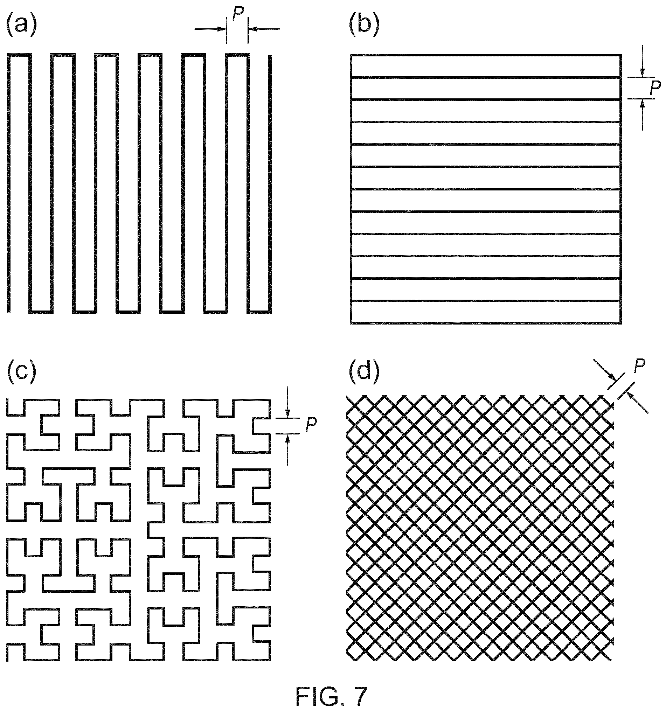

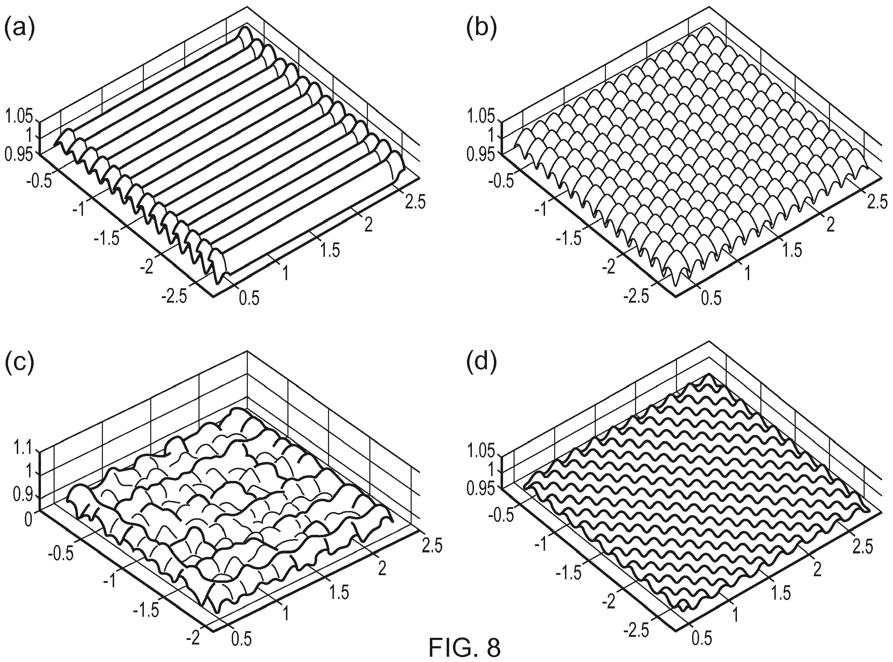

Using these fixed parameters, the scanned or measured surface curvatures of the surface and the tool paths generated as described above, a simulation of the resulting material removal is performed using an analytical material removal model to provide a map showing the material removal pattern. Figure 7 shows four example polishing tool paths, labelled (a) to (d). Path (a) is a simple scanning path, path (b) is a bi-directional scanning path, path (c) is a Hilbert path and path (d) a Peano path. The corresponding material removal maps are shown in Figure 8, again labelled (a) to (d).

For each of the tool-paths with the same strategy but differing step-over distances (e.g. for each variation 38a,38b,38c of the tool-path 38 shown in Figure 4A, for each variation of the tool path 40 shown in Figure 4B, etc.), the tool path with the maximum step-over distance which maintains the minimum threshold for undulations is selected. A larger step-over distance will result in a quicker process time, but poorer surface quality in terms of evenness, so the above process effectively determines the largest usable step-over distance for each path type.

The total process time for each of the remaining tool-paths is then calculated by multiplying the total tool path length by the feed-rate. From this calculation, a tool path strategy can then be selected based on the least time taken and most even material removal map. This would be the most optimized tool path strategy based on process time and surface quality.

Finally, based on the selected tool path strategy (e.g. orientation, tool path type, step over), other operational parameters such as optimized force profile over time, feed-rate and belt speed can be determined. For example, the minimum and maximum values for key process variable considered in the linishing operation (hardness of contact wheel/backing pads, grit size, force, belt speed, feed rate) are selected, and Design of Experiments (DOE) or factorial design methods can be used to understand the effect of the key process variables (KPVs) applied to the tool path strategy, and select the appropriate KPVs for a desired output. In this respect, it is important that the variations in material removal are understood.

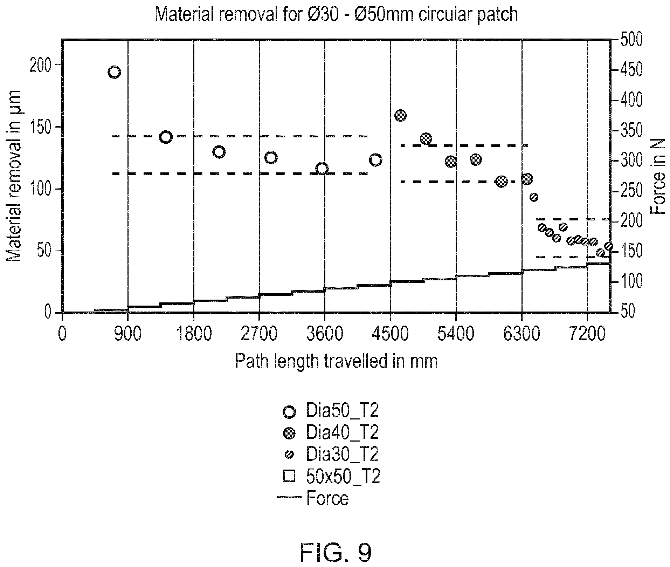

Figure 9 shows an example plot of material removal against path length travelled for various tools and applied forces. This plot thus provides details of the effects of belt wear on material removal for a particular tool-path.

An experimental database of previous trials can be used to compensate for the polishing width and force, as well as for belt wear if belt wear compensation data for each tool-path type, such as the plot of Figure 9, is saved in a database.

Thus, the tool-path strategy selected from the simulation will be the most optimized strategy based on process time and surface quality, for this class of geometry and is applicable to different sizes of the same class of geometries.

A number of pre-defined tool-path types are stored on a database and are simulated for the given input geometry and process parameters to define the optimised tool-path for a given variable. Input process parameters have been captured from accessing manual operations and from previous similar work. It should be understood that a tool-path optimised based on machining time may be very different from a tool-path optimised based on applied force.

The tool-path is generated by fitting a shape within the scanned geometry and using an algorithm that defines the tool-path whilst setting the step over rate, and tool-path width etc. Different types of tools and wheel are accounted for in the input process parameters.

The methodology involves first determining the optimized tool-path and corresponding linishing parameters, which can be used to automatically generate the control points. CAM software can be used to automatically generate the tool-path from these control points. The tool-path and corresponding database of parameters can then be applied to automatically linish flat parts with various shapes.

The disclosure not only automates a tool-path strategy, but uses a database of pre-defined tool-path types to find an optimum solution based on one optimum output variable. This database can be readily updated with new tool-path types.

Possible modifications or improvements to the disclosure include providing an evolving system or a system with a 'smart' intelligence, for example by feeding back the best choices for given geometries to reduce lead time.

There is even scope for the system to become fully automated, from the initial input scan through to the end linished product. However, the benefits described also apply to systems where there is operator interaction, e.g. between inputting the variables and capturing the geometry data, and running the linishing program.

The disclosure provides a tool-path strategy that automates the tool-path type, length, belt speed, spindle speed, and feed rate from input geometry and process parameters. The result is a reduction in lead time and controlled Material Removal Rate (MRR). The solution is unique because it not only automates the tool-path strategy, but can also decide on the optimum tool-path type for a given variable, such as process time.

In the known prior art systems, only one type of tool-path can be automatically generated. In contrast, the disclosure considers different tool-path types (e.g. raster, concentric, zig-zag etc) and different orientations of the tool to select an optimized tool-path for a set/given process time.

In the prior art, the designed tool-paths are fed into a material removal model to visualize the material removed. There is no indication of what the tool-path should be, and the tool-path is based on the experience of the programmer. The disclosure provides a tool-path generator that is able to determine the tool-path type and required parameters for accurate linishing, or consistent material removal, over the approximately two dimensional geometry.

Although described above in relation to a linishing operation on a particular surface geometry, the disclosure allows coupling of a tool-path with process parameters. It is therefore applicable to broader geometries, material types and machine platforms (robots & CNCs).

The disclosure could also be applied as a "black-box" process model, where the optimum tool-path and process parameters are defined without requiring domain knowledge and input from the end user.

The abovementioned methodology, e.g. determining optimized control points and using CAM software to automatically generate a tool-path from the control points, is widely applicable. The methods could be applied not only for controlled material removal of raised 2D features as described, but also for controlled material removal over relatively large surfaces with low, regular curvatures, for example outlet guide vanes, fan blades, optical lens surfacing and other work-pieces requiring precise even material removal. The method may even find use in other procession operations including welding, machining, and material deposition (Additive Layer Manufacturing).

## Claims

1. A method for selecting a tool-path strategy in a material processing operation, the method comprising:
a) determining the geometry of a work piece (34) to be processed and the contact patch (36) of a tool on the work piece (34);
b) defining a tool-path boundary (30,32) based on the geometry of the work piece (34) and the contact patch (36) of the tool;
c) simulating a number of different possible tool-paths (38,40,46) within the tool-path boundary (30,32);
d) calculating a material removal map for each simulated tool path (38,40,46);
e) calculating the process time for at least a selection of the simulated tool paths (38,40,46); and
f) selecting a preferred tool-path (38,40,46) based on a predefined requirement for material removal and/or process time.

2. The method according to Claim 1, wherein more than one tool-path boundary (30,32) is determined to account for different possible orientations of the tool.

3. The method according to Claim 2, wherein a number of different possible tool-paths (38,40,46) are simulated within each tool-path boundary (30,32).

4. The method according to any preceding claim, wherein the different possible tool-paths (38,40,46) comprise tool-paths of different types.

5. The method according to any preceding claim, wherein the different possible tool-paths (38,40,46) comprise tool-paths (38,40,46) of different orientations.

6. The method according to any preceding claim, wherein the different possible tool-paths (38,40,46) comprise tool-paths (38,40,46) with different step-over distances.

7. The method according to Claim 6, wherein, in step e), the process time is calculated for a selection of the simulated tool-paths (38,40,46) which have the largest step-over distance to achieve a predetermined minimum threshold for undulations calculated in step d).

8. The method according to any preceding claim, wherein, in step b), the geometry of the work piece (34) is determined using an optical measuring/scanning technique.

9. The method according to any preceding claim, wherein, in step b), the contact patch (36) of a tool on the work piece (34) is determined experimentally.

10. The method according to any one of Claims 1 to 8, wherein, in step b), the contact patch (36) of a tool on the work piece (34) is determined theoretically.

11. The method according to any preceding claim, wherein, in step d) the material removal map for each tool-path (38,40,46) is calculated at a common defined force.

12. The method according to any one of Claims 1 to 10, wherein, in step d) the material removal map for each tool-path (38,40,46) is calculated at a common defined feed rate.

13. The method according to any preceding claim, wherein the different tool-paths (38,40,46) simulated in step c) are stored on a database.

14. The method according to Claim 13, wherein the database also contains data relating to belt wear for the different tool-paths (38,40,46) such that the method can compensate for belt wear.
